# EUROPEAN PATENT APPLICATION

(11) **EP 1 195 358 A1**
(43) Date of publication of application: **10.04.2002**
(21) Application number: 01904319.9
(22) Date of filing: 02.02.2001
(51) Int. Cl.: C02F 11/00, C02F 11/14

(54) **METHOD FOR TREATING OIL-CONTAINING SLUDGE**

(30) Priority: 04.02.2000 JP 2000027091; 17.03.2000 JP 2000075596
(71) Applicant: Taiho Industries Co., Ltd., Minato-ku, Tokyo 108-0074 (JP)
(72) Inventor: UEFUJI, Zenichiro, Hyougo 671-2221 (JP); MATSUURA, Kazumasa, Kanagawa 239-0826 (JP); OHNO, Toshiyuki, Kanagawa 232-0061 (JP); NAKANO, Daigo, Kanagawa 238-0245 (JP)
(74) Representative: Smith, Norman Ian
(86) International application number: JP0100751
(87) International publication number: WO0156939

(57) **Abstract**

An oil-bearing sludge processing method includes the steps of bringing a processing agent having calcium oxide as its main component into contact with oil-bearing sludge to cause a reaction between a water component of the oil-bearing sludge and the calcium oxide in the processing agent, thereby partially volatizing, dispersing and removing oil component by heat from the reaction and forming porous calcium hydroxide produced by the reaction in a form of a powdery and granular material that has adsorbed the oil component and has been covered with a calcium carbonate layer. The material does not leach out the oil component and is used as a soil fertilizer, a combustion accelerator, a construction material, a road material, etc.

## Description

### Technical Field:

This invention relates to an oil-bearing sludge processing method and a sludge processing apparatus that uses the method for processing oil-bearing sludge, e.g., oil sludge discharged from oil tanks, etc., or its intermediate processing substances, and changes it to an easy-to-handle powdery and granular material for final processing or expanding its useful application.

### Background Art:

As is well known, oil sludge accumulates at the bottom of crude oil tanks and other oil tanks. For example, when water (hot water) is used in cleaning an oil tank, oil sludge and wash water are contained in the discharged wastewater. After passing through a water recovery means, such as an apparatus for separation by specific gravity difference after the addition of a coagulant or a drum filter type filtering process apparatus, oil sludge is obtained containing relatively little oil and much water. If oil is used to clean the oil tank, oil sludge is obtained with relatively much oil and little water.

Various methods have been attempted in the final processing or effective utilization of the oil sludge obtained in this manner. For example, there have been attempts at microbial decomposition of the oil sludge in the ground, which is then used as planting soil, or to use it as a combustion accelerator.

However, the biggest problem with oil sludge is how difficult it is to handle. That is, the oil or water contained in it is not consistent, and therefore its properties are not consistent, and because it is normally very viscous or is lumpy, it is extremely difficult to handle. Further, due to its small surface area, microbial decomposition or re-use in combustion is not very efficient.

Secondly, the oil portion of oil sludge has poor retention. That is, if the oil sludge is placed in a landfill in the ground, the oil portion leaches out into the surrounding soil and disperses, thus expanding and polluting the landfill area, which increases the area for decomposition by microbes. To prevent this leaching, the oil sludge must be enclosed in a sheet.

Therefore, a processing method has been sought that will increase the retention of the oil component while improving the handling of oil sludge.

The inventors, noting that it was possible to generate a porous calcium hydroxide by reacting calcium oxide with water and that this calcium hydroxide would adsorb oil, accomplished this invention.

One object of this invention is to provide an oil sludge processing method and an oil-bearing sludge processing apparatus that uses this method to change oil sludge to be in a state that is easy to handle, to prevent the oil component from leaching out into the soil even when buried in the ground, and to be effectively reusable.

### Disclosure of the Invention:

The processing method for processing oil-bearing sludge according to this invention comprises the steps of bringing a processing agent having calcium oxide as its main component into contact with oil-bearing sludge to cause a reaction between a water component of the oil-bearing sludge and the calcium oxide in the processing agent, thereby partially volatizing, dispersing and removing oil component by heat from the reaction and forming a reaction product in a form of a powdery and granular material that has adsorbed the oil component, and disposing of or recovering the reaction product.

However, in the processes described above, one process does not have to complete before proceeding to the next process with the boundary between processes being unclear, and they are only distinguished here by the principal action occurring in each.

The processing agent used in the above processing method has calcium oxide as its principal component, but it may also includes materials containing an inorganic powder that is heat resistant and serves as the adsorption carrier for the oil component.

Further, the above-mentioned processing agent includes materials containing from 50% to more than 100% calcium oxide with respect to the oil component of the oil-bearing sludge.

The oil-bearing sludge and processing agent may be brought into contact with each other in an agitation layer turning at high speed.

The processing apparatus forprocessing oil-bearing sludge of this invention comprises a sludge supply mechanism, a transport mechanism that transports the supplied sludge, a mechanism for injecting a processing agent in the transported sludge, and an agitation and mixing mechanism that transports the sludge and processing agent introduced from the transport mechanism and supply mechanism while agitating and mixing them, and the agitation and mixing mechanism comprises a plurality of agitation blades disposed in a radial configuration for recovery of the powdery and granular material inside the transport path and whose one end is positioned below the supply openings from the transport mechanism and supply mechanism.

The agitation and mixing mechanism also includes those configurations equipped with a mechanism for either rendering the scattered material harmless or removing it.

In addition to the above configuration, the agitation and mixing mechanism may also be equipped with a sludge processing apparatus having a transport path disposed in two stages in the agitation and mixing mechanism, wherein a first rotating shaft that rotates at high speed is disposed in the first stage transport path and a second rotating shaft that rotates at slow speed is disposed in the second stage transport path.

As described above, when a processing agent with calcium oxide as its main component is brought in contact with oil-bearing sludge, the calcium oxide undergoes a hydration reaction with the water component of the sludge and forms a highly porous calcium hydroxide and the oil component is adsorbed to the inside of the particles. Following this, the surface of the calcium hydroxide particles reacts with the carbon dioxide in the air to form a calcium carbonate layer.

Therefore, a powdery and granular material is obtained in which oil is enclosed in a calcium carbonate layer.

Since this powdery and granular material is coated with this calcium carbonate layer, it is dry and easy to handle. Further, since the oil component is securely adsorbed in the voids in the particles, it will not leach out even if buried in the ground. Therefore, when it is used as a fluidizing agent for cement, the amount of water being added to the cement can be reduced. It can also be used as a soil-modifying agent and an asphalt quantity-increasing agent. Also, since the powdery and granular material has a large surface area, it canbe used as a fuel. Quicklime produced after combustion of the fuel can be used as a raw material for cement.

The foregoing and other objects and features of the invention are explained in detail below based on the attached drawings.

### Brief Description of the Invention:

FIG. 1 is a flowchart showing an example of the oil-bearing sludge processing method of this invention.
FIG. 2 is a front view of a cross section of a portion showing an example of the oil sludge processing apparatus in which the method of this invention is implemented.
FIG. 3 is a plan view of the oil sludge processing apparatus in FIG. 2.
FIG. 4 is a side cross section of the oil sludge processing apparatus in FIG. 2.
FIG. 5 is a front view of a cross section of a portion showing another example of the oil sludge processing apparatus in which the method of this invention is implemented.
FIG. 6 is a plan view of the oil sludge processing apparatus in FIG. 5.
FIG. 7 is a side cross section of the oil sludge processing apparatus in FIG. 5.

### Best Mode for Carrying out the Invention:

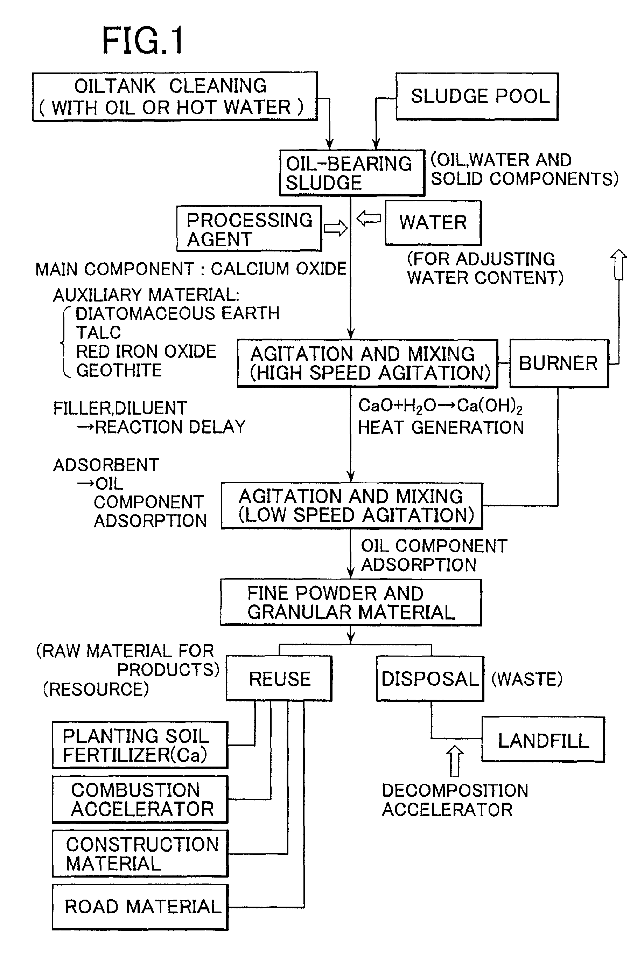

An example of the preferred embodiment of the oil-bearing sludge processing method of this invention is explained based on the flowchart in FIG. 1.

First is an explanation of the first process of the invention in which the processing agent is brought in contact with the oil-bearing sludge.

The oil-bearing sludge processed by this invention is not limited by the properties of the solids and can be any oil-bearing sludge as long as it contains both oil and water. For example, as shown in the flowchart, it can be sludge discharged by cleaning oil tanks or it can be sludge that has been allowed to stand in a sludge pool. If an oil tank is cleanedwith oil, then an oil-bearing sludge that is oil-rich, i.e., high in oil content and low in water content, is discharged, and if an oil tank is cleaned with hot water, then an oil-bearing sludge that is relatively water-rich, i.e., low in oil content and high water in content, is discharged.

When the discharged oil-bearing sludge contains a large quantity of solids, such as large masses, iron rust, pebbles, etc., the solids are preferably fractionated and removed beforehand using a separator, a filter, etc.

Water may be added to the oil-bearing sludge as required to adjust the amount of water contained before the sludge is brought in contact with the processing agent having calcium oxide as its main component. This processing agent should contain calcium oxide in an amount that is 50% to 100% of the oil component of the oil-bearing sludge. If it is less than 50%, then the final powdery and granular material will not be dry, and if it is greater than 100%, then it will not be economical.

The processing agent having calcium oxide as its main component may be calcium oxide all by itself, or it can be mixed with a heat-resistant inorganic powder as an auxiliary material that will serve as an adsorption carrier for the oil component. Examples of the kind of inorganic materials that can be used include diatomaceous earth, clay, red iron oxide, geothite and talc. This inorganic powder acts as filler and as a diluent in the processing agent to prevent sudden reactionbetween the calcium oxide and water, and it also acts to adsorb the oil component.

The addition of water should be evenly dispersed, and it can be mixed in advanced to ensure that the oil-bearing sludge has a uniform water-content.

Next is an explanation of the second process of this invention wherein the oil component is volatized and dispersed by the reaction between water and calcium oxide.

When the water component of the oil-bearing sludge and the calciumoxide (CaO) in the processing agent are brought in contact, a hydration reaction CaO + H₂O → Ca(OH)₂ accompanying heat occurs, and part of the oil component and water component contained in the sludge is volatized by the heat and dispersed. Depending on the dispersed component, it can be either recovered or adsorbed and subjected to separate disposal. Another option is to incinerate the dispersed component by means of a burner or other additional apparatus as shown in the flowchart.

In the second process, it is desirable that agitation and mixing be performed as shown in the flowchart by means of high-speed agitation, i.e., agitation and mixing are performed with high agitation efficiency. When agitation andmixing are performed with high agitation efficiency, the calcium oxide becomes evenly dispersed, localized sudden reactions between the calcium oxide and water are suppressed, and the reaction heat acts on the oil-bearing sludge uniformly, resulting in a state in which fluidization occurs or the internal oil is easily dispersed and adsorbed.

Next is an explanation of the third process of this invention in which the remaining oil component is adsorbed by the calcium hydroxide, which then becomes a powdery and granular material.

When the calcium oxide (CaO) in the processing agent is brought in contact with the water component in the oil-bearing sludge, calcium hydroxide (Ca(OH)₂) is generated as the reaction product, but the calcium hydroxide generated is in the formof porous particles . Therefore, when this reaction product comes in contact with the oil component in the oil-bearing sludge, it can adsorb the oil inside the particles . Following this, the particle surface of the calcium hydroxide reacts with the carbon dioxide in the air, thus forming a calcium carbonate layer. Therefore, what is finally obtained is a powdery and granular material of Ca(OH)₂ in which the oil component is adhered inside and whose surface is covered with a calcium carbonate layer, thus resulting in a material in which the oil component is enclosed inside a calcium carbonate layer. Therefore, the powdery and granular material obtained in this way is dry and does not stick, thus making it extremely easy to handle.

In this third process, agitation and mixing are done at slow speed as shown in the flowchart; that is, it is desirable to agitate and mix at a relatively low agitation efficiency and over a time period that is longer than in the preceding second process. Even if the oil component (asphalt component, etc.) of the oil-bearing sludge to be processed is high, the reaction heat causes fluidization and prevents the material from adhering to the inside wall of the agitation apparatus or forming large lumps, resulting in a drypowdery and granular material. That is, by agitating and mixing at low speed, the reaction heat gradually cools and reduces the stickiness, thus yielding a dry granular material with a small particle diameter of 0.5 to 5.0 mm as a result of the agitation effect.

Next is an explanation of the fourth process wherein the powdery and granular material formed by this invention is processed or recovered.

As described above, a powdery and granular material of Ca (OH) ₂ in which the oil component is adsorbed inside and is covered with a calcium carbonate layer is obtained, and since the oil component is enclosed inside the calcium carbonate layer, the surface of the powdery and granular material is dry and not sticky and is extremely easy to handle. Therefore, if buried in the ground as is or with a decomposition accelerator added, the oil component will not leach out and spread and pollute the surrounding soil.

Further, as shown in the flowchart, this material can be reused as a raw material for products or resource; for example, it can possibly be used as a soil fertilizer (Ca) for planting, a combustion accelerator, aconstructionmaterial, oraroadmaterial (concrete, asphalt).

When a processing agent is used inwhich an inorganic powder has been mixed as the adsorption carrier as described above, the calcium oxide in the processing agent becomes relatively diluted, which suppresses sudden reaction between the calcium oxide and the water component while also delaying the reaction, thus yielding a powdery and granular material with small particles and in which the oil component is consistently adsorbed.

The processing method for oil-bearing sludge of this invention can be used to perform batch processing or continuous processing in an apparatus with an agitation and mixing mechanism in the transport path.

There are no restrictions on the dimensions of the apparatus or the structure of each rotating shaft; for example, assuming the agitation and mixing (low-speed agitation) in the third process has a rotational speed of 1, the rotational speed of agitation and mixing (high-speed agitation) in the second process should be 2 to 200 times faster. More specifically, if the rotational speed in the second process is 100 to 1000 rpm, the rotational speed in the third process should be 5 to 50 rpm.

Below is an explanation of the oil sludge processing apparatus for implementing the method of this invention.

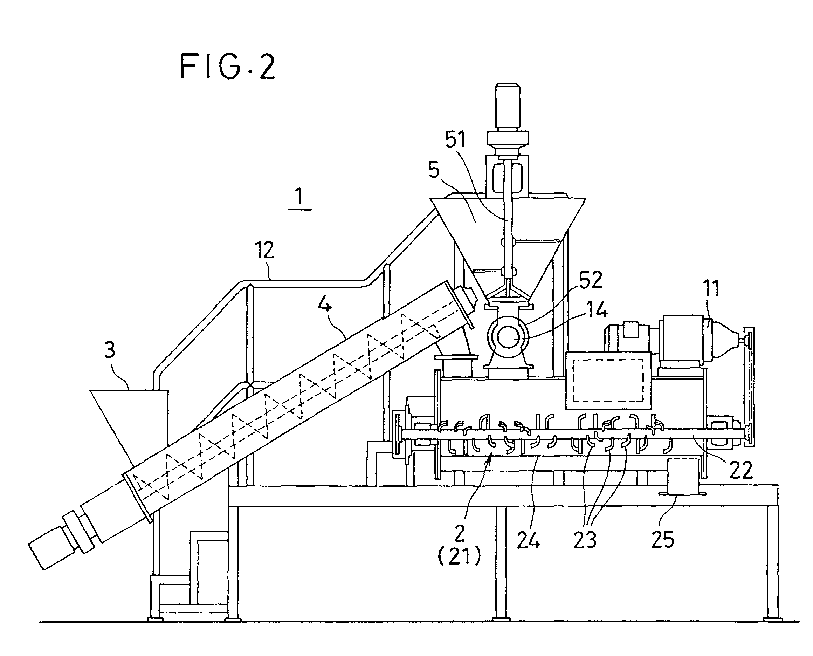

In the oil sludge processing apparatus shown in FIGS. 2 to 4, the transport path 21 is only one stage.

As shown in FIG. 2, in the oil sludge processing apparatus 1, the oil sludge supply mechanism 3 is a sludge supply hopper, the oil sludge transport mechanism 4 is a double-axle screw conveyor, and the supply mechanism 5 for the processing agent with calcium oxide as its main component is a processing agent supply hopper.

Also, the sludge supply hopper 3 is fixed on the top of the bottom end of the double-axle screw conveyor 4, and the bottom of the top end of the double-axle screw conveyor 4 disposed on an incline is fixed to the top of the front end of the agitation and mixing apparatus 2 (transport path 21) via a linking member. Therefore, oil sludge is supplied from the sludge supply hopper 3 to the double-axle screw conveyor 4, rises up on the incline during agitation rotation, and then falls into the front end of the agitation and mixing mechanism 2.

An agitation mechanism 51 for preventing bridging is disposed inside the processing agent supply hopper 5, and a rotary valve 52 is disposed at the bottom end of the hopper 5 and is secured to the top of the front end of the agitation and mixing mechanism 2 via a linking member. Therefore, the processing agent falls down into the front end of the agitation and mixing mechanism 2 via the rotary valve 14 without bridging in the processing agent supply hopper 5.

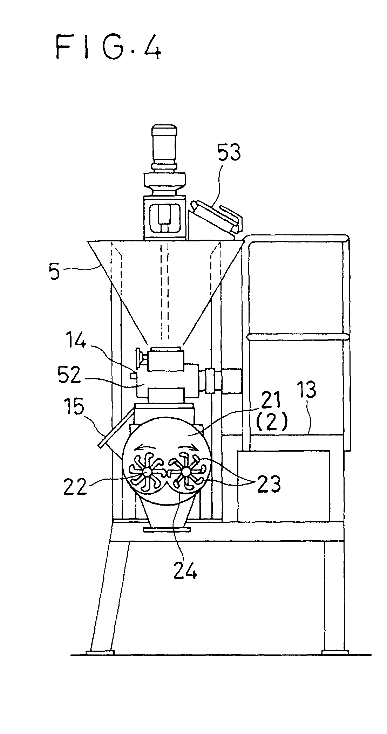

As shown in FIG. 4, a roughly cylindrical transport path 21 in which a pair of rotating shafts 22, 22 are disposed horizontally and in parallel is formed inside the agitation and mixing mechanism 2 and is configured such that the rotating shafts 22, 22 are rotated in mutually opposite directions by a motor 11, and a plurality of agitation blades 23 are disposed in a radial configuration on each rotating shaft 22 . The bottom 24 of the transport path 21 is formed around the rotational path of the ends of the agitation blades 23 on each rotating shaft 22.

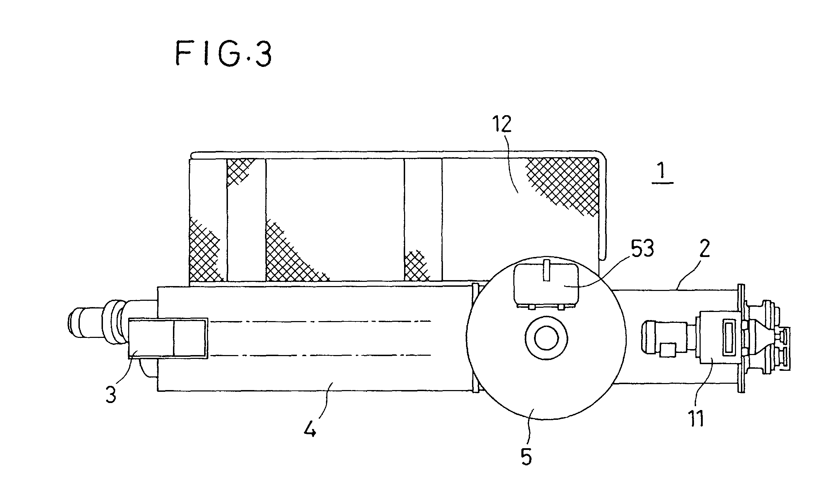

In FIG. 3, reference numeral 12 denotes a work platform, and in FIG. 4, numeral 13 denotes a platform for supplying calcium oxide and inspection, numeral 53 denotes a processing agent supply opening, numeral 14 denotes a rotary valve, and numeral 15 denotes an inspection opening.

Therefore, by placing oil sludge and processing agent inside the agitation and mixing mechanism 2, they are transported from the front end to the rear end while being uniformly agitated and mixed in the transport path 21, during which time the calcium oxide (CaO) in the processing agent comes in contact with the water component of the oil sludge, a hydration reaction occurs and generates heat, and a porous calcium hydroxide (Ca(OH)₂) is generated. This reaction heat volatizes the oil component so that it can be dispersed and removed. Further, the porous calcium hydroxide comes in contact with the oil component of the oil sludge and adsorbs it. The powdery and granular material that adsorbs the oil component is discharged from the discharge opening 25 and is disposed or recovered as required.

Next, the particle surface of the calcium hydroxide reacts with the carbon dioxide in the air to form a calcium carbonate layer, and therefore a powdery and granular material is obtained whose surface layer is calcium carbonate and in which the oil component is adsorbed inside.

In the oil sludge processing apparatus 1 with this kind of structure, oil sludge is supplied continuously from the sludge supply hopper 3 and processing agent is supplied continuously from the processing agent supply hopper 5 into the agitation and mixing apparatus 2 (transport path 21), whereby a dry powdery and granular material in which the oil component has been adsorbed can be continuously discharged from the discharge opening 25.

Using the processing apparatus in FIGS. 2 to 4, an example in which oil sludge is processed is shown below.

In this example, 200 kg of sludge (oil component: 30%, water component: 20%, remaining portion: iron rust, sand and other solids) from the bottom of a crude oil tank after cleaning with hot water is placed in the oil sludge supply hopper 3 and 60 kg of calcium oxide as the processing agent is placed in the processing agent supply hopper 5. The rotating shafts 22, 22 in transport path 21 rotate at 300 rpm. One minute after the oil sludge is supplied, a dry, brown-colored powdery and granular material with a particle diameter of 0.5 - 5 mm is discharged from the discharge opening 25.

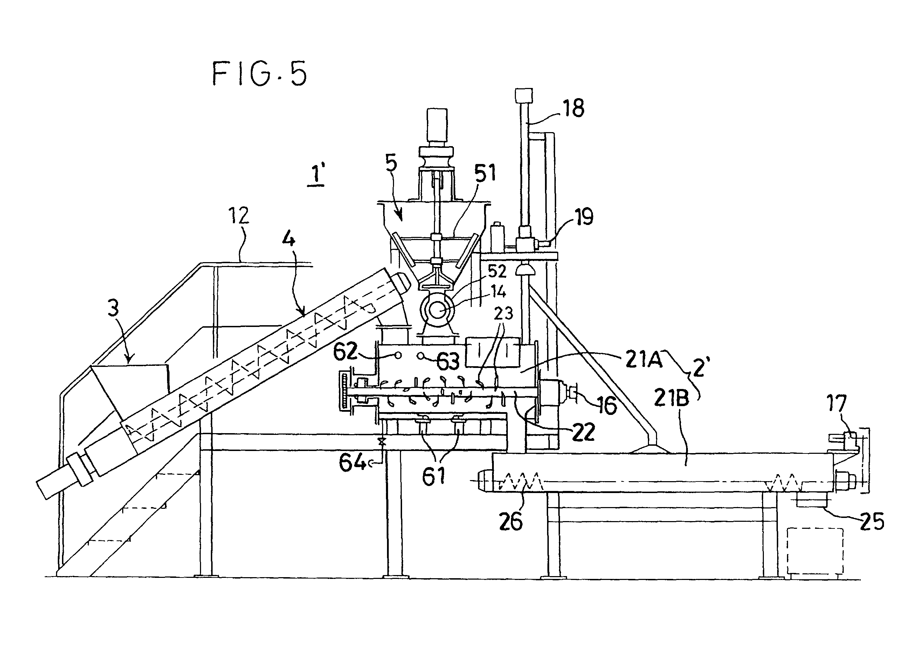

The oil sludge processing apparatus 1' shown in FIGS. 5 to 7 has a transport path divided into two stages (the first stage transport path is 21A and the second stage transport path is 21B).

As shown in FIG. 5, the oil sludge processing apparatus 1' is exactly the same as the oil sludge processing apparatus 1 except for the configuration of the agitation and mixing apparatus 2', and the oil sludge supply mechanism 3 is a sludge supply hopper, the oil sludge transport mechanism 4 is a double-axle screw conveyor, and the supply mechanism 5 for the processing agent with calcium oxide as its main component is a processing agent supply hopper.

Also, the sludge supply hopper 3 is fixed on the top of the bottom end of the double-axle screw conveyor 4, and the bottom of the top end of the double-axle screw conveyor 4 disposed on an incline is fixed to the top of the front end of the agitation and mixing apparatus 2' via a linking member. Therefore, oil sludge is supplied from the sludge supply hopper 3 to the double-axle screw conveyor 4, rises up on the incline during agitation rotation, and then falls into the front end of the agitation and mixing mechanism 2'.

An agitation mechanism 51 for preventing bridging is disposed inside the processing agent supply hopper 5, and a rotary valve 52 is disposed at the bottom end of the hopper 5 and is secured to the top of the front end of the agitation and mixing mechanism 2' (first transport path 21A) via a linking member. Therefore, the processing agent falls down into the front end of the agitation and mixing mechanism 2' via the rotary valve 52 without bridging in the processing agent supply hopper 5.

The agitation and mixing mechanism 2' comprises a 2-stage transport path 21A, 21B.

The first stage transport path 21A is nearly the same as the transport path 21 in the first embodiment in that it is a roughly cylindrical transport path in which a pair of first rotating shafts 22, 22 are disposed horizontally and in parallel and is configured such that the first rotating shafts 22, 22 are rotated in mutually opposite directions by one motor 16 equipped with a speed change gear, and a plurality of agitation blades 23 are disposed in a radial configuration on each first rotating shaft 22. The bottom 24 of the first transport path 21A is formed around the rotational path of the ends of the agitation blades 23 on each first rotating shaft 22. This configuration is exactly the same as the transport path in the fist embodiment described above. In addition, this first transport path 21A is also equipped with a chopper 61 which rotates at an extremely high rate and points up in a direction perpendicular to the first rotating shafts 22, a water supply mechanism 62 that supplies water to the mixture in a suitable amount, a nitrogen supply mechanism 63 for preventing explosion, and a steam supply mechanism 64 to prevent the adhesion of oil sludge to the inside wall at the beginning of operation.

The second stage transport path 21B is a roughly cylindrical transport path in which one second rotating shaft 26 is disposed horizontally, and this second rotating shaft 26 is the rotating shaft of a screw conveyor rotated by a motor 17 disposed on the end of the shaft.

An exhaust pipe 18 is disposed on the top of the transport paths 21A and 21B to exhaust internal water vapor and volatized oil and dust and other dispersed debris. A kerosene burner 19 is disposed in the middle of this exhaust pipe 18 to incinerate the oil component of the exhaust gas, moisture and bad-smelling substances and prevent the oil component from escaping outside the apparatus. There can be used a filter or a dust collector that adsorbs exhaust gas, etc.

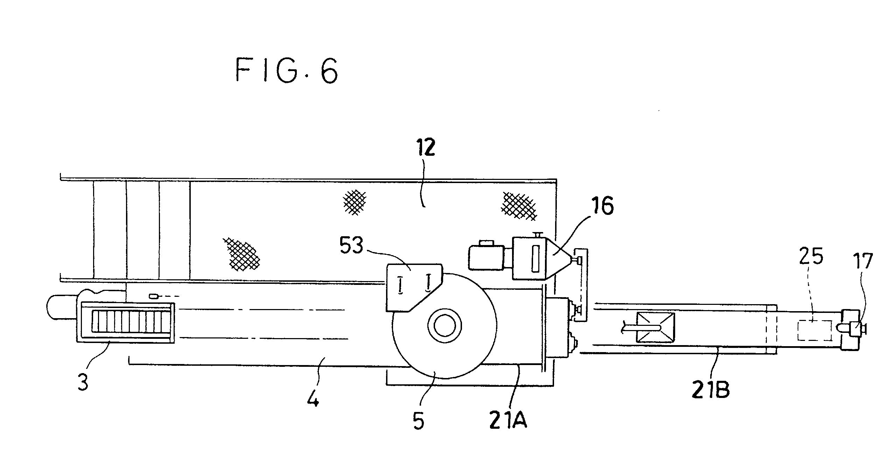

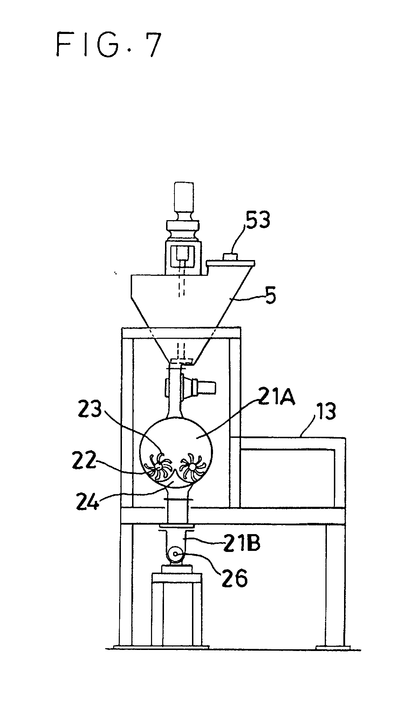

In FIG. 6, reference numeral 12 denotes a work platform, and in FIG. 7, numeral 13 denotes a platform for supplying calcium oxide and inspection, numeral 53 denotes a processing agent supply opening, numeral 14 denotes a rotary sensor, and numeral 15 denotes an inspection opening.

The length of the first transport path 21A in the above processing apparatus is 1000 mm, the rotational speed of the first rotating shaft 22 disposed therein is 300 rpm (outside diameter of blade path is 200 mm), and the rotational speed of the chopper 61 is 3600 rpm (outside diameter of blade path is 100 mm), whereby the time the sludge is present in (passes through) the first transport path 21A is 2 to 4 minutes. The length of the second transport path 21B is 2500 mm and the rotational speed of the second rotating shaft disposed therein is 3 to 15 rpm, whereby the time the sludge is present in (passes through) the second transport path 21B is about 7 minutes. The processing capability of the oil sludge processing apparatus with this design is 300 to 500 liters/hour.

When oil sludge is fed continuously from the sludge supply hopper 3 and processing agent is fed continuously from the processing agent supply hopper 5 in the oil sludge processing apparatus with this configuration as in the oil sludge processing apparatus 1 in FIGS. 2 to 4, a dry powdery and granular material in which the oil component has been adsorbed can be continuously discharged from the discharge opening 25.

Since the transport path (21A, 21B) is provided in two stages, the mixture of oil sludge and processing agent is agitated at high speed in the first stage transport path 21A such that the processing agent is uniformly mixed in the oil sludge, and the large lumps are broken down into small-diameter particles in the second stage transport path 21B, resulting in a small-diameter powdery and granular material; that is, a smaller-diameter powdery and granular material to which the oil has been adsorbed is obtained.

Further, since the water supply mechanism 62 that supplies water in an appropriate amount is provided, water, which is essential for the reaction with calcium oxide in this invention, can be supplied from this water supply mechanism 62 when oil sludge with a relatively large amount of oil and small. amount of water is processed.

The fifth embodiment that processes oil sludge using the apparatus in FIGS. 5 to 7 is shown below.

After washing a crude oil tank with oil, 200 kg of sludge (oil component: 73%, water component: 11%, remaining portion: iron rust, sand and other solids) remaining in the bottom of the tank is placed in the oil sludge supply hopper 3, 18 liters of water is supplied from the water supply mechanism 62, and 100 kg of calcium oxide and 10 kg of silica soil are placed in the processing agent supply hopper 5 as processing agent. A dry powdery and granular material with a particle diameter of 0.5 to 5.0 mm is then discharged from the discharge opening 25 12 minutes after placing the oil sludge in the apparatus.

The oil component (oil component extracted by carbon tetrachloride) adsorbed to the powdery and granular material is 12%, but the oil component escaping with the water (oil component extracted by pure water) is less than 2.5 ppm.

The sludge processing apparatus of this invention comprises, as described above, a sludge supplymechanism, a transportmechanism, a feed mechanism for the processing agent, and an agitation and mixing mechanism, and there are no restrictions on the apparatus other than the agitation and mixing mechanism. That is, the supply mechanism and charging mechanism can be a hopper with the most efficient configuration, or other known mechanisms can be applied. The agitation and mixing mechanism can be equipped with a mechanism to render scattered components harmless or remove them, and depending on the type of scattered component, a mechanism with a suitable configuration, e.g., burner or dust collector, can be used. The transport mechanism, as well, can be a belt conveyor, screw conveyor or other known mechanism.

The invention was described based on the embodiments in the drawings, but this invention is not limited to the embodiments described above and can be implemented in any manner as long as it does not change the configuration noted in the claims.

### Industrial Applicability:

As described above, the processing of oil-bearing sludge according to this invention can process oil-bearing sludge to create a powdery and granular material in which the oil component has been adsorbed.

That is, the calcium oxide in the processing agent is brought in contact with the water component of the oil sludge, a hydration reaction occurs and creates heat, and porous calcium hydroxide particles are generated, whereby some of the oil component of the oil-bearing sludge is volatized, dispersed and removed by the reaction heat, and the porous calcium hydroxide particles, which are a product of this reaction, adsorb the oil component of the oil-bearing sludge inside the particles. Following this, the surface of the calcium hydroxide particles reacts with the carbon dioxide in the air to form a calcium carbonate layer. The powdery and granular material finally obtained is a dry, small-diameter (large surface area) powdery and granular material in which the oil component is enclosed inside a calcium carbonate layer, thus making it extremely easy to handle. Further, since the oil component is safely adsorbed in the voids inside the particles and a calcium carbonate layer has formed on the surfaces of the particles, the oil has superior retention; for example, even if the material is buried in the ground as is, ground water or rain water will not cause the oil component to leach out to the surrounding soil and pollute it. Therefore, the powdery and granular material processed by the oil-bearing sludge processing method of this invention can be used as is as a landfill material, or even if changed to a planting soil bymicrobial decomposition, the oil component contained inside will not leach out and spread to pollute the surrounding soil even without the use of a sheet or other separator. Further, even if the recovered powdery and granular material is added to fuel as a combustion accelerator and incinerated, the powdery and granular material will have an efficient combustion accelerating effect (catalyst effect) because of its extremely large surface area. Also, since the main components of this powdery and granular material are Ca(OH)₂, inorganic substances and oil, it will not adversely affect combustion, but rather it will suppress the generation of SO₃ in the combustion gas, which will have the effect of preventing corrosion of the wall of the boiler, etc., due to SO₃ and other oxidizing gases. Further, quicklime produced after combustion of the powdery and granular material can be used as a raw material for cement.

Furthermore, when the powdery and granular material is used as a fluidizing agent for cement, the amount of water being added to the cement can be reduced. Moreover, it can also be used as an asphalt quantity-increasing agent.

## Claims

1. An oil-bearing sludge processing method comprising the steps of bringing a processing agent having calcium oxide as its main component into contact with oil-bearing sludge to cause a reaction between a water component of the oil-bearing sludge and the calcium oxide in the processing agent, thereby partially volatizing, dispersing and removing oil component by heat from the reaction and forming a reaction product in a form of a powdery and granular material that has adsorbed the oil component, and disposing of or recovering the reaction product.

2. The oil-bearing sludge processing method according to claim 1, wherein said processing agent contains an inorganic powder that is heat-resistant and serves as an adsorption carrier for the oil component.

3. The oil-bearing sludge processing method according to any one of claims 1 and 2, wherein said processing agent contains calcium oxide in an amount equivalent to 50% to 100% with respect to the oil component of the oil-bearing sludge.

4. The oil-bearing sludge processing method according to any one of claims 1 to 3, wherein said oil-bearing sludge and said processing agent are brought into contact with each other in an agitation layer with agitation blades that rotate at high speed.

5. The oil-bearing sludge processing method according to claim 1, wherein said powdery and granular material is covered with a calcium carbonate layer.

6. A sludge processing apparatus comprising a sludge supply mechanism (3), a transport mechanism (4) for transporting the supplied sludge, a supplymechanism (5) for injecting processing agent into the transported sludge, and an agitation and mixing mechanism (2) that transports the sludge and processing agent supplied from openings of said transport mechanism and supply mechanism while agitating and mixing them,
wherein said agitation and mixing mechanism (2) is equipped with a plurality of rotating shafts (22) that each have a plurality of agitation blades (23) disposed in a radial configuration and that are disposed inside a transport path (21) whose end is positioned below the openings of said transport mechanism and supply mechanism, and a powdery and granular material obtained by bringing the processing agent and sludge in contact with each other is recovered at the other end of said transport path.

7. The sludge processing apparatus according to claim 6, wherein said agitation and mixing mechanism is equipped with a mechanism for either rendering scattered material harmless or removing it.

8. The sludge processing apparatus according to any one of claims 6 and 7, wherein the transport path (21A, 21B) is disposed in two stages in said agitation and mixing mechanism (2'), and said rotating shafts comprise a first rotating shaft (22) that rotates at high speed and disposed in the first stage transport path (21A) and a second rotating shaft (26) that rotates at low speed and disposed in the second stage transport path.
